(19) Europäisches Patentamt

European Patent Office

Office européen des brevets

(11) **EP 4 524 843 A1**

(12) **EUROPEAN PATENT APPLICATION**

(43) Date of publication:
**19.03.2025 Bulletin 2025/12**

(21) Application number: **24188225.7**

(22) Date of filing: **12.07.2024**

(51) International Patent Classification (IPC):
**G06Q 10/047** (2023.01)   **G06Q 10/0631** (2023.01)

(52) Cooperative Patent Classification (CPC):
**G06Q 10/047; G06Q 10/0631**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.09.2023 JP 2023147780**

(71) Applicant: **FUJITSU LIMITED**
**Kawasaki-shi, Kanagawa 211-8588 (JP)**

(72) Inventor: **KIMURA, Keiji**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING PROGRAM, INFORMATION PROCESSING METHOD, AND INFORMATION PROCESSING DEVICE**

(57)     An information processing program including instructions which, when executed by a computer, cause the computer to execute processing including: generating routes in a case where a plurality of mobile bodies that have started from a specific node passes through a plurality of nodes and returns to the specific node, which satisfy a plurality of newly set conditions related to the routes, from a set of the plurality of routes that indicates order in which the plurality of mobile bodies visit the nodes, by applying a column generation method to the set of the plurality of routes; generating a route selection problem by using the generated routes; solving the generated route selection problem; and outputting a solution result of the route selection problem.

FIG. 1

```
START
  │
  ▼
ACQUIRE INITIAL VALUES OF ROUTE SET R          ─ S10
  │
  ▼
GENERATE REDUCED COST MINIMIZATION PROBLEM
BY SOLVING DUAL PROBLEM OF LINEAR RELAXATION
PROBLEM OF ROUTE SELECTION PROBLEM FOR
ROUTE SET R                                     ─ S11
  │
  ▼
SOLVE REDUCED COST MINIMIZATION PROBLEM        ─ S12
  │
  ▼
IS OBJECTIVE FUNCTION VALUE OF OBTAINED         ─ S13
SOLUTION NEGATIVE?  ──YES──▶ ADD ROUTE CORRESPONDING TO
  │                          OBTAINED SOLUTION TO ROUTE SET R  ─ S14
  │NO
  ▼
OUTPUT ROUTE SET R                             ─ S15
  │
  ▼
END
```

EP 4 524 843 A1

**Description**

FIELD

The embodiment discussed herein is related to an information processing program and the like for solving a vehicle routing problem.

BACKGROUND

A vehicle routing problem (hereinafter referred to as VRP) is a problem of obtaining routes for delivering packages from a specific point called a depot by a plurality of mobile bodies, for example, transport vehicles, and returning to the depot. The VRP is one of representative problems of a combinatorial optimization problem, and is actively studied from a classical VRP to a VRP in the real world. It is not uncommon for the VRP in the real world to include problem setting specific to each delivery company, and there are various variations.

Since before, in order to cope with the various variations of the VRP, work of developing a solution system based on specific problem setting preset in the VRP is performed for each VRP.

Japanese Laid-open Patent Publication No. 2021-165196 is disclosed as related art.

SUMMARY

TECHNICAL PROBLEM

Although studies on solution systems for various vehicle routing problems have been conducted around the world, the solution systems that have been studied are each specialized in a particular object VRP and are difficult to apply to other variations of the VRP.

For example, in a case where a business that provides a VRP solution system to a delivery company that desires to solve a VRP is assumed, even when the solution system may be developed, a high level of human resources and a sufficient period are needed each time, which is not realistic from a viewpoint of business scale.

In one aspect, an object of an embodiment is to provide an information processing program, an information processing method, and an information processing device capable of solving even a VRP for which unknown problem setting is made.

SOLUTION TO PROBLEM

According to an aspect of the embodiments, there is provided an information processing program including instructions which, when executed by a computer, cause the computer to execute processing including: generating routes in a case where a plurality of mobile bodies that have started from a specific node passes through a plurality of nodes and returns to the specific node, which satisfy a plurality of newly set conditions related to the routes, from a set of the plurality of routes that indicates order in which the plurality of mobile bodies visit the nodes, by applying a column generation method to the set of the plurality of routes; generating a route selection problem by using the generated routes; solving the generated route selection problem; and outputting a solution result of the route selection problem.

ADVANTAGEOUS EFFECTS OF INVENTION

An embodiment may solve even a vehicle routing problem (VRP) for which unknown problem setting is made.

BRIEF DESCRIPTION OF DRAWINGS

FIG. 1 is a flowchart illustrating a processing procedure of a column generation method;
FIG. 2 is a flowchart illustrating a processing procedure of a local search;
FIG. 3 is a flowchart illustrating a processing procedure of an information processing device according to the present embodiment;
FIG. 4 is a functional block diagram illustrating a configuration of the information processing device according to the present embodiment;
FIG. 5 is a diagram illustrating an example of a data structure of a vehicle routing problem (VRP) general form database (DB);

FIG. 6 is a diagram for describing an example of processing of a generation unit; and

FIG. 7 is a diagram illustrating an example of a hardware configuration of a computer that implements functions similar to those of the information processing device of the embodiment.

DESCRIPTION OF EMBODIMENTS

Hereinafter, an embodiment of an information processing program, an information processing method, and an information processing device disclosed in the present application will be described in detail with reference to the drawings. Note that the present disclosure is not limited by the embodiment.

[Embodiment]

(Representative Problem Setting of VRP in Real World)

Before describing the present embodiment, representative problem setting of a vehicle routing problem (VRP) in the real world will be described. For example, a simplest definition of the VRP is indicated as a definition A1.

Definition A1: A plurality of transport vehicles that has started from a specific point called a depot returns to the depot again via customers. Order of passage of the transport vehicle is called a route, and a requested package is delivered to each customer. An optimization problem of obtaining the routes that satisfy all requests and minimize a total travel distance of the respective routes.

Even in a case where it is simply referred to as the VRP, the VRP may include a capacity restriction of a transport vehicle and an upper limit constraint on the number of transport vehicles, and an objective function (a function desired to be minimized) may be a function related to a travel time or the number of transport vehicles. In the present embodiment, problem setting such as a capacity constraint is appropriately referred to as an "attribute". The VRP in the real world includes a wide variety of attributes. Hereinafter, examples of representative attributes will be described.

Capacity (C): Each transport vehicle needs to have a total size of loads equal to or less than a maximum load capacity.

Heterogeneous Fleet (HF): A plurality of types of transport vehicles having different maximum load capacities and the like is handled.

Backhauls (B): Packages are delivered from a depot to customers, packages are picked up from customers on a way back to the depot, and a return to the depot is made.

Time-Windows (TW): A time frame for delivery or pickup is given, and delivery or pickup needs to be performed within the time frame.

Multiple Depots (MD): There are multiple depots, and a transport vehicle may start from any one of the multiple depots.

Multi-Trips (MT): A temporary return to the depot and a re-start with packages may be made.

Split Deliveries (SD): Split delivery may be performed for one customer.

Pickup and Deliveries (PD): A package is picked up at a visit to a customer and is delivered to another customer.

Time Dependent (TD): In order to consider road congestion, a travel time between points depends on a time zone of the day.

In the following description, for example, the attribute "Time-Windows" may be abbreviated as the attribute "TW". In addition to a travel distance and a travel time of a transport vehicle, a fixed cost that varies depending on a type of the transport vehicle may be considered as the frequent objective function.

(VRP General Form)

Subsequently, a VRP general form will be described. In an information processing device according to the present embodiment, an attribute of a VRP to be solved and basic information such as a travel time between the respective nodes are given as input. The node corresponds to a point such as a depot or a customer. The VRP solved by the information processing device is internally called a VRP general form. In order to define the VRP general form, each of a "task", a "route constraint", a "transport vehicle number constraint", a "route cost", and a "travel time calculation method" is defined. In the following description, the information processing device according to the present embodiment is referred to as an "information processing device 100".

A definition of the "task" will be described. The task is represented as a set of information on work of picking up and delivering a package. For example, the task includes the following information. *Pickup node: a node where a package is picked up, *Delivery node: a node where a package is delivered, *Priority: a priority related to the task, *Load amount vector: a vector related to a load amount, indicating a type, an amount, or the like of a package, *Pickup time frame: a time frame related to pickup of a package, *Delivery time frame: a time frame related to delivery of a package, and *Possibility of split: whether split delivery is possible.

In the simplest VRP, all packages are picked up at a depot and delivered to customers. For example, in a case where the attribute PD is considered, a package is delivered from a customer to a different customer. In the case of the attribute B, there are two types of packages: a package delivered from a depot to a customer, and a package picked up from a customer on the way before a return to the depot. In a VRP in practical work, there are cases where a plurality of attributes is mixed, and one of objects of introducing the concept of the task is to express them flexibly as optimization problems in the same framework.

Next, a definition of the "route constraint" will be described. The route constraint is a constraint condition for each route, which does not depend on another route. Note that the route commonly refers to visit order of a transport vehicle, and here, it is assumed that the route also includes constraint conditions related to information such as start and arrival times and a load amount accompanying the route. The route constraint in practical work includes, for example, a constraint condition related to a time at which a return to a depot needs to be made, a constraint condition related to a travel time different for each type of a transport vehicle, a constraint condition related to a node that needs to be visited before a return to a depot, and the like.

Next, a definition of the "transport vehicle number constraint" will be described. For example, when a positive integer k and a condition related to a transport vehicle are given, the transport vehicle number constraint is a constraint condition that the number of transport vehicles satisfying the condition is equal to or less than k or equal to k. For example, the following constraint conditions correspond to the transport vehicle number constraint. *Constraint condition related to the number of usable specific transport vehicles, *Constraint condition related to an upper limit of the total number of transport vehicles, and *Constraint condition related to the number of transport vehicles capable of long-distance travel.

Next, a definition of the "route cost" will be described. A cost that may be defined for one route is called the route cost. For example, the route cost includes a fixed cost depending on a travel time and a travel distance of a route, a type of a transport vehicle, and the like.

Next, a definition of the "travel time calculation method" will be described. The travel time calculation method is a calculation method related to a travel time between optional two nodes (edge). In the simplest VRP, a travel time of each edge is uniquely determined. In a case where road congestion is considered, the travel time calculation method according to a start time of a start point node of an edge is determined.

Next, a definition of the VRP general form will be described. For example, the definition of the VRP general form is indicated as a definition B1.

Definition B1: The following optimization problem is called the VRP general form. *A plurality of transport vehicles that has started from a specific node called a depot passes through another node and returns to the depot again (depot start-arrival constraint), *One or more types of transport vehicles having different sizes, start nodes (depots), and the like are available, *Packages of all tasks are picked up and delivered, and *Each task is assigned to a transport vehicle, and the following constraint conditions (task constraints) b-1, b-2, b-3, and b-4 related to tasks are satisfied.

b-1: A transport vehicle passes through a pickup node and then through a delivery node.

b-2: In a case where a package related to a task having a priority p is picked up, a task having a priority higher than the priority p may not be picked up thereafter, and furthermore, a task having a priority lower than the priority p may not be picked up unless delivery of the task having the priority p assigned to a transport vehicle is completed.

b-3: Constraint condition related to a pickup time frame and a delivery time frame.

b-4: When split is not possible, it is needed to perform pickup and delivery at one time with one transport vehicle. *For each transport vehicle, a possibility of a temporary return to a depot is determined. *For a route of each transport vehicle, route constraints included in a given route constraint set are satisfied. *For routes of all transport vehicles, transport vehicle number constraints included in a given transport vehicle number constraint set are satisfied. *A travel time between optional two nodes is calculated based on the travel time calculation method. *When route cost functions $f_1,...,f_n$ for a route r and positive parameters $\lambda_1,...,\lambda_n$ are given, a set R of routes satisfying all constraint conditions that minimize an objective function F(R) indicated in Expression (1) is obtained.

[Expression 1]

$$F(R) = \sum_{r \in R} \sum_{i=1}^{n} \lambda_i f_i(r) \qquad \cdots (1)$$

Note that the representative attributes described with the simplest VRP may be expressed as follows in the VRP general form.

Capacity (C): Expressible as the route constraint, and a load amount is included in information regarding a task.

Heterogeneous Fleet (HF): An attribute indicating a problem setting that a VRP handles a plurality of types of transport vehicles. As described above, the VRP general form is able to handle a plurality of types of transport vehicles, and therefore the VRP general form has the attribute HF.

Backhauls (B): An attribute indicating a problem setting that includes delivering packages from the depot to the customer, collecting from the customer on the way back to the depot, and returning to the depot. The problem setting of the attribute B may expressed by setting the priority of the task in the VRP general form. Therefore, the VRP general form includes the attribute B.

Time-Windows (TW): Expressible similarly to the attribute C.

Multiple Depots (MD): An attribute indicating a problem setting that there are multiple depots and the transport vehicle departs from any one of the multiple depots. In the VRP general form, the problem setting for the attribute MD may be expressed by setting the type of vehicle to be transported for each depot. Therefore, the VRP general form includes the attribute MD.

Multi-Trips (MT): As described above, the VRP general form is able to consider a temporary return to the depot, and therefore the VRP general form includes the attribute MT.

Split Deliveries (SD): The VRP general form is able to set whether each task is split or not, and there fore the VRP general form includes the attribute SD.

Pickup and Deliveries (PD): The VRP general form is able to set the pickup and delivery nodes for each task, and therefore The VRP general form includes the attribute PD.

Time Dependent (TD): The problem setting for the attribute TD may be expressed by defining the method of travel time calculation according to the departure time of the edge origin node. Therefore, the VRP general form includes the attribute TD.

The information processing device 100 solves the VRP general form. Since the VRP general form may increase attributes corresponding to the route constraint, the transport vehicle number constraint, and the route cost, there is a possibility that the VRP general form may be applied to various variations of the VRP.

(Route Generation Approach of Present Embodiment)

Subsequently, a route generation approach of the information processing device 100 will be described. The information processing device 100 adopts a column generation method to generate routes satisfying the depot start-arrival constraint, the task constraint, and all the route constraints based on the VRP general form. Furthermore, the information processing device 100 selects, from the generated routes, routes that minimize an objective function so as to satisfy other constraint conditions.

<Route Selection Problem>

Before describing the column generation method, a route selection problem used in the present embodiment is formulated. First, the following are defined.

*A generated route set is denoted by R.
*A cost of a route $r \in R$ is defined as in Expression (2). Description related to $\lambda$ and f is similar to that in the above description.

[Expression 2]

$$c_r := \sum_{i=1}^n \lambda_i f(r)(> 0) \qquad \cdots (2)$$

*A set of tasks in which split delivery is possible is denoted by S, and a set of other tasks is denoted by T.

*A load type set is denoted by M.
*A load amount of a load type $j \in M$ of a task $i \in S$ is denoted by $b_{ij}$. *$a_{ijr}$ ($i \in S \cup T$; $j \in M$; $r \in R$) is defined as in Expression (3). In Expression (3), "o.w." stands for "otherwise".

[Expression 3]

$$a_{ijr} = \begin{cases} 1 & \text{if } i \in T \text{ and route } r \text{ processes load type } j \text{ of task } i \\ (\text{Load amount transported by route } r) & \text{if } i \in S \text{ and route } r \text{ processes load type } j \text{ of task } i \\ 0 & \text{o.w.} \end{cases}$$

$$\cdots (3)$$

*In the transport vehicle number constraint, a set of upper limit constraints is denoted by U, and the upper limit number of transport vehicles is denoted by ut (t ∈ U). *$d_{tr}$ (t ∈ U; r ∈ R) is defined as in Expression (4a).

[Expression 4a]

$$d_{tr} = \begin{cases} 1 & \text{if route } r \in R \text{ satisfies condition of transport vehicle number constraint corresponding to } t \in U \\ 0 & \text{o.w.} \end{cases}$$

$$\cdots (4a)$$

*In a transport vehicle constraint, a set of equality constraints is denoted by E, and the number of transport vehicles is denoted by $e_t$ (t ∈ E). *$g_{tr}$ (t ∈ E; r ∈ R) is defined as in Expression (4b).

[Expression 4b]

$$g_{tr} = \begin{cases} 1 & \text{if route } r \in R \text{ satisfies condition of transport vehicle number constraint corresponding to } t \in E \\ 0 & \text{o.w.} \end{cases}$$

$$\cdots (4b)$$

In the present embodiment, an integer variable $x_r$ indicating the number of adoptions of a route (the number of vehicles using the corresponding route) is introduced for each route r ∈ R. At this time, the route selection problem is formulated by Expression (5). Note that it is assumed that the $x_r$ included in Expression (5) satisfies Expressions (5a), (5b), (5c), (5d), and (5e).

[Expression 5]

$$\min_x \sum_{r \in R} c_r x_r \qquad \cdots (5)$$

[Expression 5a]

$$\sum_{r \in R} a_{ijr} x_r \geq 1 (i \in T : j \in M) \qquad \cdots (5a)$$

[Expression 5b]

$$\sum_{r \in R} a_{ijr} x_r \geq b_{ij} (i \in S : j \in M) \qquad \cdots (5b)$$

[Expression 5c]

$$\sum_{r \in R} d_{tr} x_r \leq u_t (t \in U) \qquad \cdots (5c)$$

[Expression 5d]

$$\sum_{r \in R} g_{tr} x_r = e_t (t \in E) \qquad \cdots (5d)$$

[Expression 5e]

$$x_r \geq 0, x_r \in \mathbb{Z} (r \in R) \qquad \cdots (5e)$$

When solving the route selection problem, the information processing device 100 searches for a value of the $x_r$ that minimizes a value of Expression (5) under the condition that the $x_r$ satisfies Expressions (5a) to (5e). Note that, in a case where the value of the $x_r$ is 0, the corresponding route is excluded from routes to be adopted. For example, in a case where a value of $x_{r1}$ is 0, it indicates that a route r1 is not adopted.

<Column Generation Method for VRP General Form>

Subsequently, the column generation method for the VRP general form will be described. In a case where it is assumed that all the routes satisfying the constraint conditions may be listed, an optimal solution for the VRP general form may be obtained by solving the route selection problem. However, listing all the routes is not realistic from a viewpoint that a memory of the information processing device 100 and the route selection problem become large in scale.

In practice, since an inefficient route is also included in all the routes, an object of the column generation method is to generate only useful routes. A goal of the column generation method is to obtain an optimal value of a linear relaxation problem of the route selection problem in a case where all the routes are listed. It is empirically known that a set of routes generated for obtaining an optimal solution of a linear programming problem is excellent in configuring an optimal solution of an original route selection problem.

<Processing Procedure of Column Generation Method>

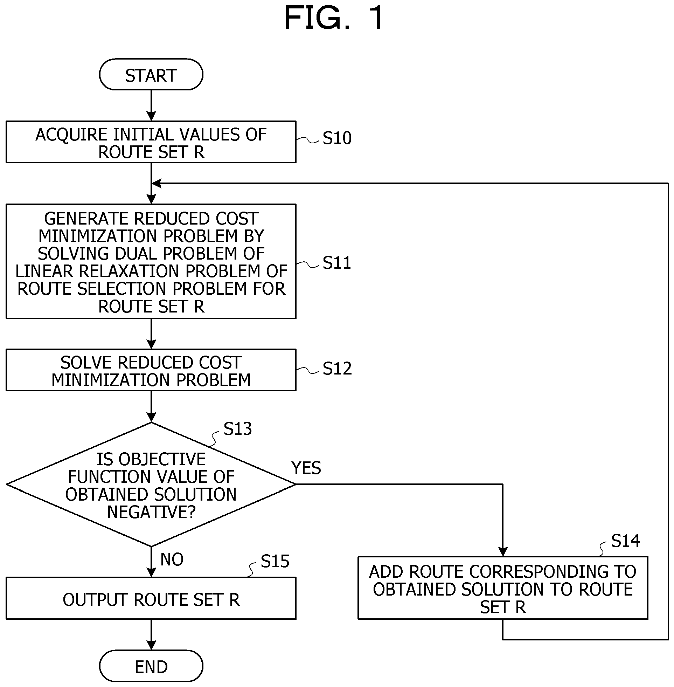

Here, an example of a processing procedure of the column generation method executed by the information processing device 100 will be described. FIG. 1 is a flowchart illustrating the processing procedure of the column generation method. As illustrated in FIG. 1, the information processing device 100 acquires initial values of a route set R specified by a user (step S10). The information processing device 100 generates a reduced cost minimization problem by solving a dual problem of a linear relaxation problem of a route selection problem for the route set R (step S11).

The information processing device 100 solves the reduced cost minimization problem (step S12). In a case where an objective function value of an obtained solution is negative (Step S13, Yes), the information processing device 100 adds a route corresponding to the obtained solution to the route set R (step S14), and proceeds to step S11.

On the other hand, in a case where the objective function value of the obtained solution is not negative (Step S13, No), the information processing device 100 outputs the route set R (step S15).

Since the linear relaxation problem in step S11 of FIG. 1 is a linear programming problem, it is possible to solve the problem at a high speed by using an existing solver. On the other hand, the reduced cost minimization problem in step S12 is not an easy problem because routes that minimize a reduced cost and satisfy the depot start-arrival constraint, the task constraint, and all the route constraints are obtained.

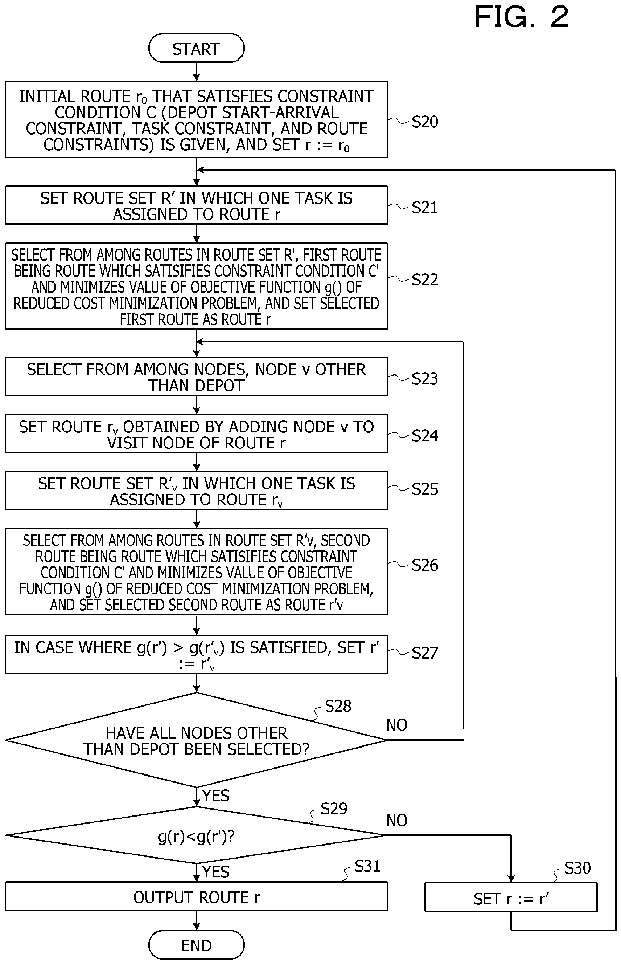

Therefore, the information processing device 100 applies a local search to the reduced cost minimization problem to obtain the solution. For example, the information processing device 100 executes processing of FIG. 2 described below as the processing in step S12 of FIG. 1.

<Processing procedure of Local Search>

FIG. 2 is a flowchart illustrating a processing procedure of the local search. As illustrated in FIG. 2, the information processing device 100 is given an initial route $r_0$ that satisfies a constraint condition C (the depot start-arrival constraint, the task constraint, and the route constraints), and sets $r := r_0$ (step S20). For example, in the step S20, the initial route $r_0$ is set into a value of a variable indicating the route r.

The information processing device 100 sets a route set R' in which one task is assigned to the route r (step S21). The information processing device 100 selects, from among routes included in the route set R', a first route being a route which satisfies the constraint condition C and minimizes a value of an objective function g() of the reduced cost minimization problem, and sets the selected first route as a route r' (i.e., $r' \in R'$) (step S22).

The information processing device 100 selects, from among the nodes, a node v other than a depot (step S23). The information processing device 100 sets a route $r_v$ obtained by adding the node v to a visit node of the route r (step S24). The information processing device 100 sets a route set $R'_v$ in which one task is assigned to the route $r_v$ (step S25).

The information processing device 100 selects, from among routes included in the route set $R'_v$, a second route being a route which satisfies the constraint condition C and minimizes a value of the objective function g() of the reduced cost minimization problem, and sets the selected second route as a route $r'_v$ (i.e., $r'_v \in R'$) (step S26).

In a case where $g(r') > g(r'_v)$ is satisfied, the information processing device 100 sets $r' := r'_v$ (step S27). For example, in the step S27, the route $r'_v$ is set into a value of a variable indicating the route r'. In a case where all the nodes other than the depot have not been selected (step S28, No), the information processing device 100 proceeds to step S23. On the other hand, in a case where all the nodes other than the depot have been selected (step S28, Yes), the information processing device 100 proceeds to step S29.

In a case where $g(r) < g(r')$ is not satisfied (step S29, No), the information processing device 100 sets $r := r'$ (step S30), and proceeds to step S21. On the other hand, in a case where $g(r) < g(r')$ is satisfied (step S29, Yes), the information processing device 100 outputs the route r (step S31).

Here, the information processing device 100 includes a route constraint determination unit, a transport vehicle number condition determination unit, a route cost calculation unit, and a travel time calculation unit, and copes with a VRP including an unexpected attribute using the route constraint determination unit, the transport vehicle number condition determination unit, the route cost calculation unit, and the travel time calculation unit.

The route constraint determination unit checks a constraint condition violation of the route constraint. For example, the route constraint determination unit is used in the processing described in step S22 of FIG. 2. The route constraint determination unit determines whether or not the route constraints included in the constraint condition C are satisfied.

The transport vehicle number condition determination unit performs condition determination of the transport vehicle number constraint. For example, the transport vehicle number condition determination unit is used in the processing described in steps S22, S26, S27, and S29 of FIG. 2. The transport vehicle number condition determination unit performs the condition determination of the transport vehicle number constraint in a case where a value of the objective function g() of the reduced cost minimization problem is calculated.

The route cost calculation unit calculates a cost of a route. For example, the route cost calculation unit is used in the processing described in steps S22, S26, and S27 of FIG. 2. The route cost calculation unit calculates the route cost in a case where a value of the objective function g() of the reduced cost minimization problem is calculated.

The travel time calculation unit calculates a travel time of an optional edge (optional two nodes) from information regarding order of visit nodes, a task in charge, and a type of a transport vehicle. For example, in a case where a travel time between two nodes is calculated by the travel time calculation unit, a travel time when travel is performed among all the nodes (in the following description, referred to as a travel time for a route) is determined for each route. The travel time for a route may be used for a check of a constraint condition violation of the route constraint, condition determination of the transport vehicle number constraint, and calculation of the route cost.

A relationship between the route constraint and the travel time for a route will be described. For example, in an attribute "Route Duration Constraints", an upper limit is imposed on the travel time for a route. Therefore, the travel time for a route is used in a case where the route constraint determination unit determines whether or not the route constraint is violated. For example, in a case where a vehicle may not travel within the travel time, it may be determined that the route constraint is violated.

A relationship between the transport vehicle number constraint and the travel time for a route will be described. For example, the travel time for a route is used in a case where the transport vehicle number condition determination unit performs condition determination of the transport vehicle number constraint such as "the number of transport vehicles whose travel time for a route is allowed to be a predetermined time (8 hours) or more is equal to or less than three".

A relationship between the route cost and the travel time for a route will be described. The route cost calculation unit uses the travel time for a route in a case where the route cost depends on the travel time for a route. For example, when the route cost is the travel time for a route, the route cost depends on the travel time for a route. When a driver of a transport vehicle is paid by the hour, the route cost depends on the travel time for a route. For example, when the travel time for a route is 1.5 hours, a labor cost of the driver for two hours is the route cost.

<Processing Procedure of Information Processing Device 100 according to Present Embodiment>

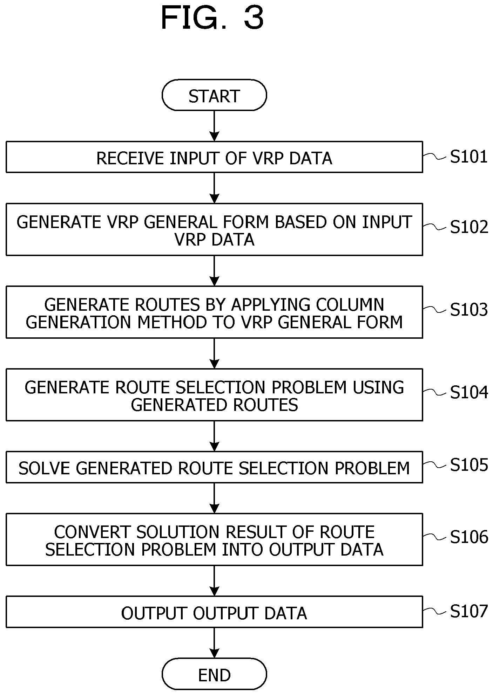

Subsequently, an example of a processing procedure of the information processing device 100 according to the present embodiment will be described. FIG. 3 is a flowchart illustrating the processing procedure of the information processing device according to the present embodiment. As illustrated in FIG. 3 the information processing device 100 receives an input of VRP data (step S101).

The information processing device 100 generates a VRP general form based on the input VRP data (step S102). The information processing device 100 generates routes by applying the column generation method to the VRP general form (step S103). For example, the processing procedure in step S103 of FIG. 3 corresponds to the processing procedure described with reference to FIG. 1.

The information processing device 100 generates a route selection problem using the generated routes (corresponding to the route set R in step S15 of FIG. 1) (step S104). For example, the generated route selection problem is indicated by Expressions (5) and (5a) to (5e) described above.

The information processing device 100 solves the generated route selection problem (step S105). The information processing device 100 converts a solution result of the route selection problem into output data (step S106). The information processing device 100 outputs the output data (step S107).

<Configuration Example of Information Processing Device 100 according to Present Embodiment>

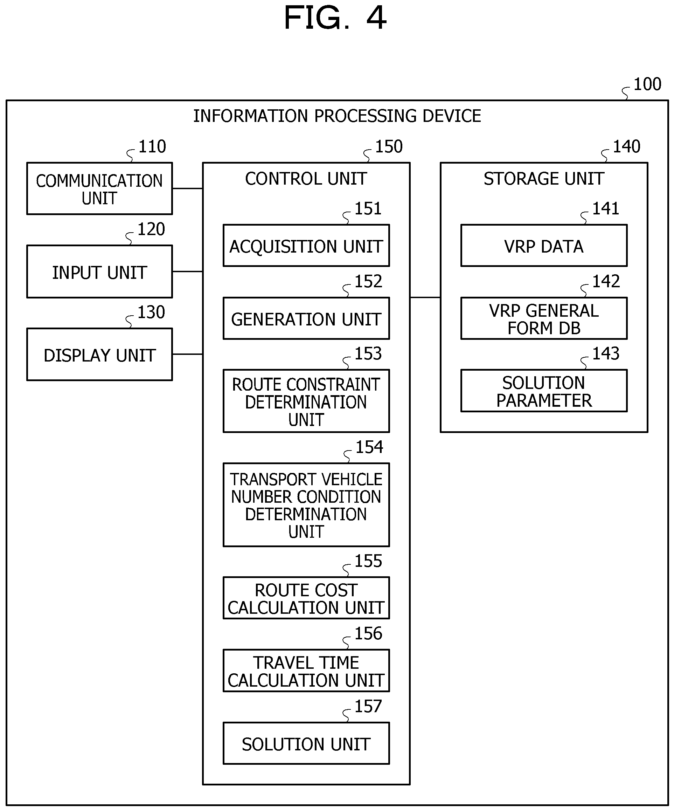

Next, a configuration example of the information processing device 100 that executes the processing described with reference to FIG. 3 will be described. FIG. 4 is a functional block diagram illustrating a configuration of the information processing device according to the present embodiment. As illustrated in FIG. 4, the information processing device 100 includes a communication unit 110, an input unit 120, a display unit 130, a storage unit 140, and a control unit 150.

The communication unit 110 executes data communication with an external device or the like owned by a delivery company via a network. The communication unit 110 is a network interface card (NIC) or the like. For example, the communication unit 110 may receive VRP data 141 from the external device or the like.

The input unit 120 is an input device that inputs various types of information to the control unit 150 of the information processing device 100. For example, the input unit 120 corresponds to a keyboard, a mouse, a touch panel, or the like. A user may input a solution parameter 143 or the like by operating the input unit 120.

The display unit 130 is a display device that displays information output from the control unit 150. For example, the display unit 130 displays output data of a solution result of a route selection problem.

The storage unit 140 includes the VRP data 141, a VRP general form database (DB) 142, and the solution parameter 143. The storage unit 140 is a memory or the like.

The VRP data 141 includes various types of data used in a VRP. For example, the VRP data 141 has data of each task, a travel time between nodes, the number of transport vehicles, and a route cost coefficient. Furthermore, the VRP data 141 includes a travel distance between nodes, a maximum load capacity, a problem setting flag, and the like. The VRP data 141 may include an add-in program for executing a route constraint determination unit 153, a transport vehicle number condition determination unit 154, a route cost calculation unit 155, and a travel time calculation unit 156 described later. For example, the VRP data 141 includes conditions related to a specific route of a delivery company. The conditions related to the specific route of the delivery company include a condition for determining whether or not the corresponding route satisfies the route constraint, a condition for determining whether or not a transport vehicle number condition is satisfied, a definition of the route cost, and data for calculating a travel time.

The VRP general form DB 142 holds data of a VRP general form (optimization problem) generated based on the VRP data 141. The VRP general form is defined in the definition B1 as described above.

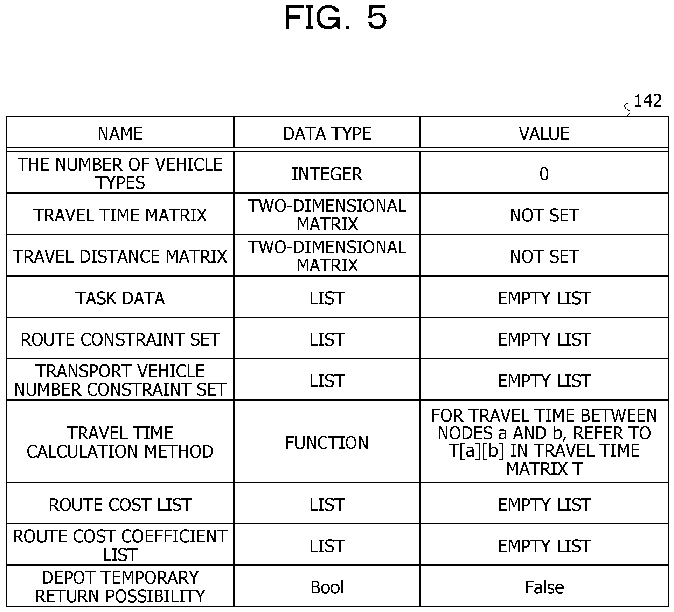

FIG. 5 is a diagram illustrating an example of a data structure of the VRP general form DB. As illustrated in FIG. 5, the VRP general form DB 142 associates a name, a data type, and a value with each other. Values set in FIG. 5 are initial values. For example, in the VRP general form DB 142, records of the number of vehicle types, a travel time matrix, a travel distance matrix, task data, a route constraint set, a transport vehicle number constraint set, a travel time calculation method, a route cost list, a route cost coefficient list, and a depot temporary return possibility are set. The depot start-arrival constraint and the like indicated in the definition B1 are included in the VRP general form, but are not illustrated in FIG. 5.

The solution parameter 143 includes a parameter such as a time limit. The information processing device 100 ends solution in a case where a time needed for the solution exceeds the time limit set in the solution parameter 143.

Subsequently, description proceeds to description of the control unit 150. The control unit 150 includes an acquisition unit 151, a generation unit 152, the route constraint determination unit 153, the transport vehicle number condition determination unit 154, the route cost calculation unit 155, the travel time calculation unit 156, and a solution unit 157. The control unit 150 is a central processing unit (CPU), a graphics processing unit (GPU), or the like.

The acquisition unit 151 acquires the VRP data 141 from an external device or the like via the communication unit 110, and stores the acquired VRP data 141 in the storage unit 140. For example, the acquisition unit 151 receives a digital signal that indicates the VRP data 141 from the external device via the communication unit 110, and acquires the VRP data from the received digital signal by decoding the received digital signal. The acquisition unit 151 acquires the solution parameter 143 from the input unit 120 or the like, and stores the solution parameter in the storage unit 140.

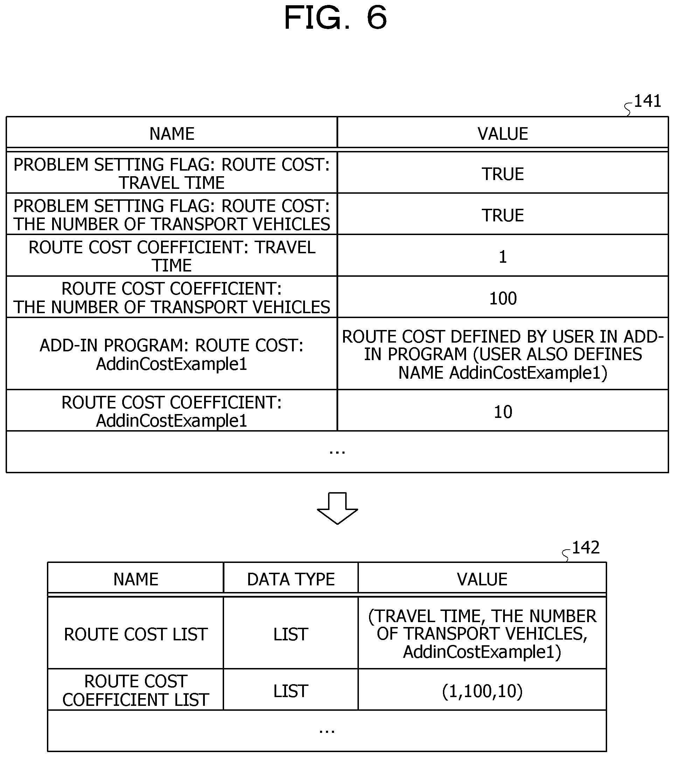

The generation unit 152 generates a VRP general form based on the VRP data 141. For example, the generation unit 152 changes initial values of the VRP general form DB 142 based on the VRP data 141. FIG. 6 is a diagram for describing an example of processing of the generation unit.

In the example illustrated in FIG. 6, the VRP data 141 associates a name and a value with each other. For example, in the VRP data 141, a value for a name "problem setting flag: route cost: travel time" is "True". A value for a name "problem setting flag: route cost: the number of transport vehicles" is "True". A value for a name "route cost coefficient: travel time" is "1". A value for a name "route cost coefficient: the number of transport vehicles" is "100". A value for a name "add-in program: route cost: AddinCostExample1" is "route cost defined by a user in an add-in program". A value for a name "route cost coefficient: AddinCostExample1" is "10". Although not illustrated in FIG. 6, the problem setting flag of the route cost includes "travel distance", "cost for each type of a transport vehicle", and the like in addition to the "travel time" and "the number of transport vehicles".

For example, the generation unit 152 updates the initial values of the VRP general form DB 142 as illustrated in FIG. 6 based on the VRP data 141. For example, the generation unit 152 updates a value of a name "route cost list" to "(travel time, the number of transport vehicles, AddinCostExample1)" in the VRP general form DB 142. The generation unit 152 sets a value of a name "route cost coefficient list" to "(1, 100, 10)".

For example, it is assumed that the generation unit 152 converts the initial values of the VRP general form DB 142 based on a preset conversion table (a rule for converting a value for a name of the VRP data 141 into a value corresponding to a name of the VRP general form DB 142). Here, the case has been described where the generation unit 152 generates the VRP general form DB 142 based on the VRP data 141. However, the generation unit 152 may acquire data of the VRP general form having set values from the input unit 120 or the like, and update the initial values of the VRP general form DB 142 based on the acquired data of the VRP general form.

The route constraint determination unit 153 checks a constraint condition violation of the route constraint. When the solution unit 157 solves a reduced cost minimization problem by a local search, the route constraint determination unit 153 acquires the object route r from the solution unit 157 and determines whether or not the route r satisfies the route constraint set in the VRP general form DB 142. For example, the route constraint determination unit 153 is used in the processing described in step S22 of FIG. 2. The route constraint determination unit 153 outputs, to the solution unit 157, a determination result as to whether or not the route r satisfies the route constraint.

The transport vehicle number condition determination unit 154 performs condition determination of the transport vehicle number constraint. When the solution unit 157 calculates a value of an objective function g() of a reduced cost minimization problem, the transport vehicle number condition determination unit 154 determines whether or not the value set to the objective function g() satisfies the transport vehicle number constraint set in the VRP general form DB 142. For example, the transport vehicle number condition determination unit 154 is used in the processing described in steps S22, S26, S27, and S29 of FIG. 2. The transport vehicle number condition determination unit 154 outputs, to the solution unit 157, a determination result as to whether or not the value set to the objective function g() satisfies the transport vehicle number constraint.

The route cost calculation unit 155 calculates a cost of a route. When the solution unit 157 calculates a value of an objective function g() of a reduced cost minimization problem, the route cost calculation unit 155 calculates the route cost based on the route cost list, the route cost coefficient list, and the like set in the VRP general form DB 142. For example, the route cost calculation unit 155 is used in the processing described in steps S22, S26, and S27 of FIG. 2. The route cost calculation unit 155 outputs the cost of the route to the solution unit 157.

The travel time calculation unit 156 calculates a travel time of an optional edge (optional two nodes) from information regarding order of visit nodes, a task in charge, and a type of a transport vehicle, which is set in the VRP general form DB 142. For example, in a case where a travel time between two nodes is calculated by the travel time calculation unit 156, a travel time when travel is performed among all nodes (a travel time for a route) is determined for each route. The travel time for the route calculated by the travel time calculation unit 156 is used for a check of a constraint condition violation of the route constraint by the route constraint determination unit 153, condition determination of the transport vehicle number constraint by the transport vehicle number condition determination unit 154, and calculation of a route cost by the route cost calculation unit 155. The travel time calculation unit 156 outputs data of the travel time corresponding to the route to the route constraint determination unit 153, the transport vehicle number condition determination unit 154, and the route cost calculation unit 155.

The solution unit 157 specifies routes by executing, at a processor circuit such as a central processing unit, the following processing to solve a VRP general form. First, the solution unit 157 generates routes by applying the column generation method to data of the VRP general form DB 142. For example, the solution unit 157 generates routes (route set R) by executing the processing described with reference to FIG. 1. Initial values of the route set R may be specified in advance, or routes starting from a depot, passing through a plurality of nodes, and returning to the depot again may be randomly generated and set as the initial values of the route set R.

The solution unit 157 executes the local search described with reference to FIG. 2 in a case where the reduced cost minimization problem described in step S12 of FIG. 1 is solved. In a process of executing the local search, the solution unit 157 requests the route constraint determination unit 153 to check a constraint condition violation of the route constraint. In the process of executing the local search (such as a timing of calculating a value of the objective function g()), the solution unit 157 requests the transport vehicle number condition determination unit 154 to perform condition determination of the transport vehicle number constraint. In the process of executing the local search, in a case where the value of the objective function g() is calculated, the solution unit 157 requests calculation of a cost of a route. Furthermore, in the process of executing the local search by the solution unit 157, the travel time calculation unit 156 calculates a travel time for a route based on data set in the VRP general form DB 142, and outputs the travel time to the route constraint determination unit 153, the transport vehicle number condition determination unit 154, and the route cost calculation unit 155.

The solution unit 157 generates routes by the column generation method, and then generates a route selection problem based on the generated routes. For example, the solution unit 157 formulates the route selection problem by Expression (5).

The solution unit 157 solves the generated route selection problem. For example, in the case of solving the route selection problem, the solution unit 157 searches for a value of the integer variable $x_r$ that minimizes a value of Expression (5) under the condition that the $x_r$ satisfies Expressions (5a) to (5e). The solution unit 157 generates output data by setting, in a route data list, a route in which the value of the $x_r$ does not become 0 among the plurality of routes generated by the column generation method. For example, in a case where the value of the $x_{r1}$ is 0, the route r1 is not added to the route data list. Note that data of the routes included in the route data list includes a type of an assigned transport vehicle, node visit order, a node visit time, task load amount data, and the like.

The solution unit 157 outputs the route data list (output data) to the display unit 130. The solution unit 157 may notify an external device or the like of the route data list via the communication unit 110. Note that, in the case of generating the route selection problem and in the case of solving the route selection problem, the solution unit 157 ends solution in a case where the time limit set in the solution parameter 143 is exceeded.

(Effects)

Next, effects of the information processing device 100 according to the present embodiment will be described. The information processing device 100 applies the column generation method to the VRP general form DB 142, and generates, from a set of a plurality of routes, routes that satisfy newly set conditions of the routes and minimize a value of an objective function. The information processing device 100 generates a route selection problem using the routes generated by applying the column generation method, solves the route selection problem, and outputs a solution result. As a result, it is possible to solve even a VRP for which unknown problem setting is made.

In a case where the routes are generated by applying the column generation method, the information processing device 100 generates, by using the route constraint determination unit 153, the routes that satisfy a route constraint and minimize the value of the objective function. As a result, even when a new route constraint is set in the VRP data 141, the routes satisfying the new route constraint may be generated.

In a case where the routes are generated by applying the column generation method, the information processing device 100 generates, by using the transport vehicle number condition determination unit 154, the routes that minimize the value of the objective function within a range satisfying a transport vehicle number constraint. As a result, even when a new transport vehicle number condition is set in the VRP data 141, the routes satisfying the new transport vehicle number condition may be generated.

In a case where the routes are generated by applying the column generation method, the information processing device 100 generates, by using the route cost calculation unit 155 and a route cost calculated by the route cost calculation unit 155, the routes that minimize the value of the objective function. As a result, even when a new definition of the route cost is set in the VRP data 141, optimal routes may be generated.

In a case where the routes are generated by applying the column generation method, the information processing device 100 performs, by using the travel time calculation unit 156 and a travel time calculated by the travel time calculation unit 156, determination as to whether or not the route constraint is satisfied, determination as to whether or not the transport vehicle number constraint is satisfied, and calculation of the route cost. As a result, even when a new definition of the travel time is set in the VRP data 141, optimal routes may be generated.

(Hardware Configuration)

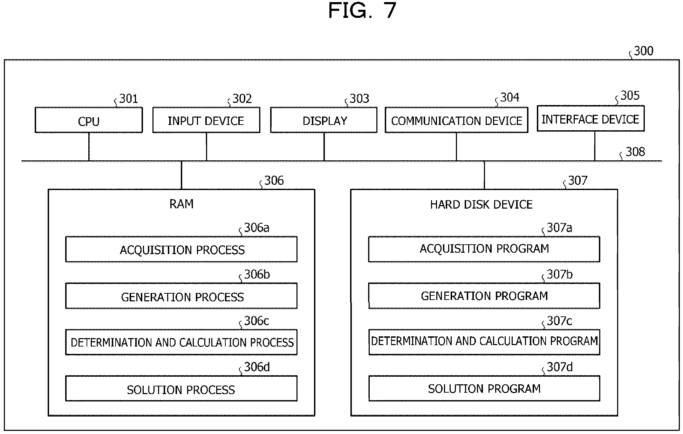

Next, an example of a hardware configuration of a computer that implements functions similar to those of the information processing device 100 described above will be described. FIG. 7 is a diagram illustrating an example of the hardware configuration of the computer that implements the functions similar to those of the information processing device of the embodiment.

As illustrated in FIG. 7, a computer 300 includes a CPU 301 that executes various types of arithmetic processing, an input device 302 that receives data input from a user, and a display 303. Furthermore, the computer 300 includes a communication device 304 that exchanges data with an external device or the like via a wired or wireless network, and an interface device 305. Furthermore, the computer 300 includes a random access memory (RAM) 306 that temporarily stores various types of information, and a hard disk device 307. Additionally, each of the devices 301 to 307 is coupled to a bus 308.

The hard disk device 307 includes an acquisition program 307a, a generation program 307b, a determination and calculation program 307c, and a solution program 307d. The CPU 301 reads each of the programs 307a to 307d and develops the programs 307a to 307d in the RAM 306.

The acquisition program 307a functions as an acquisition process 306a. The generation program 307b functions as a generation process 306b. The determination and calculation program 307c functions as a determination and calculation process 306c. The solution program 307d functions as a solution process 306d.

Processing of the acquisition process 306a corresponds to the processing of the acquisition unit 151. Processing of the generation process 306b corresponds to the processing of the generation unit 152. Processing of the determination and calculation process 306c corresponds to the processing of the route constraint determination unit 153, the transport vehicle number condition determination unit 154, and the route cost calculation unit 155. Processing of the solution process 306d corresponds to the processing of the solution unit 157.

Note that each of the programs 307a to 307d does not necessarily have to be stored in the hard disk device 307 beforehand. For example, each of the programs is stored in a "portable physical medium" to be inserted in the computer 300, such as a flexible disk (FD), a compact disc read only memory (CD-ROM), a digital versatile disc (DVD), a magneto-optical disk, or an integrated circuit (IC) card. Then, the computer 300 may read and execute each of the programs 307a to 307d.

**Claims**

1. An information processing program comprising instructions which, when executed by a computer, cause the computer to execute processing comprising:

   generating routes in a case where a plurality of mobile bodies that have started from a specific node passes through a plurality of nodes and returns to the specific node, which satisfy a plurality of newly set conditions related to the routes, from a set of the plurality of routes that indicates order in which the plurality of mobile bodies visit the nodes, by applying a column generation method to the set of the plurality of routes;
   generating a route selection problem by using the generated routes;
   solving the generated route selection problem; and
   outputting a solution result of the route selection problem.

2. The information processing program according to claim 1, wherein

   the plurality of newly set conditions includes a route constraint that indicates a constraint condition for each route, which does not depend on another route, and
   in the processing of generating the routes, routes that satisfy the route constraint and minimize a value of an objective function related to the routes are generated.

3. The information processing program according to claim 2, wherein

   the plurality of newly set conditions includes a mobile body number constraint related to the number of mobile bodies that pass through a route, and

in the processing of generating the routes, routes that minimize the value of the objective function within a range that satisfies the mobile body number constraint are generated.

4. The information processing program according to claim 3, wherein the plurality of newly set conditions includes a definition related to a cost of the route, and in the processing of generating the routes, routes that minimize the value of the objective function are generated by using a cost of the route calculated based on the definition.

5. The information processing program according to claim 4, wherein

the plurality of newly set conditions includes a definition of a travel time of the route, and
in the processing of generating the routes, the routes are generated by further using a cost of the route based on the travel time, the mobile body number constraint based on the travel time, and a route constraint based on the travel time.

6. An information processing method implemented by a computer, the information processing method comprising:

generating routes in a case where a plurality of mobile bodies that have started from a specific node passes through a plurality of nodes and returns to the specific node, which satisfy a plurality of newly set conditions related to the routes, from a set of the plurality of routes that indicates order in which the plurality of mobile bodies visit the nodes, by applying a column generation method to the set of the plurality of routes;
generating a route selection problem by using the generated routes;
solving the generated route selection problem; and
outputting a solution result of the route selection problem.

7. An information processing apparatus comprising a control unit configured to perform processing comprising:

generating routes in a case where a plurality of mobile bodies that have started from a specific node passes through a plurality of nodes and returns to the specific node, which satisfy a plurality of newly set conditions related to the routes, from a set of the plurality of routes that indicates order in which the plurality of mobile bodies visit the nodes, by applying a column generation method to the set of the plurality of routes;
generating a route selection problem by using the generated routes;
solving the generated route selection problem; and
outputting a solution result of the route selection problem.

# FIG. 1

```
        ┌─────────────┐
        │    START    │
        └──────┬──────┘
               │
               ▼
   ┌───────────────────────┐
   │ ACQUIRE INITIAL VALUES│──S10
   │    OF ROUTE SET R     │
   └───────────┬───────────┘
               │
               ▼
   ┌───────────────────────┐
   │ GENERATE REDUCED COST │
   │ MINIMIZATION PROBLEM  │
   │   BY SOLVING DUAL     │──S11
   │     PROBLEM OF        │
   │ LINEAR RELAXATION     │
   │ PROBLEM OF ROUTE      │
   │ SELECTION PROBLEM FOR │
   │     ROUTE SET R       │
   └───────────┬───────────┘
               │
               ▼
   ┌───────────────────────┐
   │  SOLVE REDUCED COST   │──S12
   │ MINIMIZATION PROBLEM  │
   └───────────┬───────────┘
               │
               ▼
          ◇ S13
   IS OBJECTIVE
   FUNCTION VALUE OF        YES
   OBTAINED SOLUTION ──────────► ADD ROUTE CORRESPONDING
   NEGATIVE?                     TO OBTAINED SOLUTION TO
        │                        ROUTE SET R   ─ S14
        │ NO   S15
        ▼
   ┌───────────────────────┐
   │  OUTPUT ROUTE SET R   │
   └───────────┬───────────┘
               │
               ▼
        ┌─────────────┐
        │     END     │
        └─────────────┘
```

# FIG. 2

START

INITIAL ROUTE $r_0$ THAT SATISFIES CONSTRAINT CONDITION C (DEPOT START-ARRIVAL CONSTRAINT, TASK CONSTRAINT, AND ROUTE CONSTRAINTS) IS GIVEN, AND SET $r := r_0$ — S20

SET ROUTE SET R' IN WHICH ONE TASK IS ASSIGNED TO ROUTE r — S21

SELECT FROM AMONG ROUTES IN ROUTE SET R', FIRST ROUTE BEING ROUTE WHICH SATISIFIES CONSTRAINT CONDITION C' AND MINIMIZES VALUE OF OBJECTIVE FUNCTION g() OF REDUCED COST MINIMIZATION PROBLEM, AND SET SELECTED FIRST ROUTE AS ROUTE r' — S22

SELECT FROM AMONG NODES, NODE v OTHER THAN DEPOT — S23

SET ROUTE $r_v$ OBTAINED BY ADDING NODE v TO VISIT NODE OF ROUTE r — S24

SET ROUTE SET $R'_v$ IN WHICH ONE TASK IS ASSIGNED TO ROUTE $r_v$ — S25

SELECT FROM AMONG ROUTES IN ROUTE SET R'v, SECOND ROUTE BEING ROUTE WHICH SATISIFIES CONSTRAINT CONDITION C' AND MINIMIZES VALUE OF OBJECTIVE FUNCTION g() OF REDUCED COST MINIMIZATION PROBLEM, AND SET SELECTED SECOND ROUTE AS ROUTE r'v — S26

IN CASE WHERE $g(r') > g(r'_v)$ IS SATISFIED, SET $r' := r'_v$ — S27

S28
HAVE ALL NODES OTHER THAN DEPOT BEEN SELECTED? — NO

YES

S29
$g(r) < g(r')$? — NO

YES

S31
OUTPUT ROUTE r

S30
SET $r := r'$

END

# FIG. 3

START

RECEIVE INPUT OF VRP DATA — S101

GENERATE VRP GENERAL FORM BASED ON INPUT VRP DATA — S102

GENERATE ROUTES BY APPLYING COLUMN GENERATION METHOD TO VRP GENERAL FORM — S103

GENERATE ROUTE SELECTION PROBLEM USING GENERATED ROUTES — S104

SOLVE GENERATED ROUTE SELECTION PROBLEM — S105

CONVERT SOLUTION RESULT OF ROUTE SELECTION PROBLEM INTO OUTPUT DATA — S106

OUTPUT OUTPUT DATA — S107

END

# FIG. 4

100

## INFORMATION PROCESSING DEVICE

| 110 COMMUNICATION UNIT | 150 CONTROL UNIT | 140 STORAGE UNIT |

**COMMUNICATION UNIT** — 110

**INPUT UNIT** — 120

**DISPLAY UNIT** — 130

**CONTROL UNIT** — 150

- **ACQUISITION UNIT** — 151
- **GENERATION UNIT** — 152
- **ROUTE CONSTRAINT DETERMINATION UNIT** — 153
- **TRANSPORT VEHICLE NUMBER CONDITION DETERMINATION UNIT** — 154
- **ROUTE COST CALCULATION UNIT** — 155
- **TRAVEL TIME CALCULATION UNIT** — 156
- **SOLUTION UNIT** — 157

**STORAGE UNIT** — 140

- **VRP DATA** — 141
- **VRP GENERAL FORM DB** — 142
- **SOLUTION PARAMETER** — 143

# FIG. 5

142

| NAME | DATA TYPE | VALUE |
|---|---|---|
| THE NUMBER OF VEHICLE TYPES | INTEGER | 0 |
| TRAVEL TIME MATRIX | TWO-DIMENSIONAL MATRIX | NOT SET |
| TRAVEL DISTANCE MATRIX | TWO-DIMENSIONAL MATRIX | NOT SET |
| TASK DATA | LIST | EMPTY LIST |
| ROUTE CONSTRAINT SET | LIST | EMPTY LIST |
| TRANSPORT VEHICLE NUMBER CONSTRAINT SET | LIST | EMPTY LIST |
| TRAVEL TIME CALCULATION METHOD | FUNCTION | FOR TRAVEL TIME BETWEEN NODES a AND b, REFER TO T[a][b] IN TRAVEL TIME MATRIX T |
| ROUTE COST LIST | LIST | EMPTY LIST |
| ROUTE COST COEFFICIENT LIST | LIST | EMPTY LIST |
| DEPOT TEMPORARY RETURN POSSIBILITY | Bool | False |

# FIG. 6

141

| NAME | VALUE |
|---|---|
| PROBLEM SETTING FLAG: ROUTE COST: TRAVEL TIME | TRUE |
| PROBLEM SETTING FLAG: ROUTE COST: THE NUMBER OF TRANSPORT VEHICLES | TRUE |
| ROUTE COST COEFFICIENT: TRAVEL TIME | 1 |
| ROUTE COST COEFFICIENT: THE NUMBER OF TRANSPORT VEHICLES | 100 |
| ADD-IN PROGRAM: ROUTE COST: AddinCostExample1 | ROUTE COST DEFINED BY USER IN ADD-IN PROGRAM (USER ALSO DEFINES NAME AddinCostExample1) |
| ROUTE COST COEFFICIENT: AddinCostExample1 | 10 |
| ... | |

142

| NAME | DATA TYPE | VALUE |
|---|---|---|
| ROUTE COST LIST | LIST | (TRAVEL TIME, THE NUMBER OF TRANSPORT VEHICLES, AddinCostExample1) |
| ROUTE COST COEFFICIENT LIST | LIST | (1,100,10) |
| ... | | |

FIG. 7

300

| 301 | 302 | 303 | 304 | 305 |
|-----|-----|-----|-----|-----|
| CPU | INPUT DEVICE | DISPLAY | COMMUNICATION DEVICE | INTERFACE DEVICE |

308

**306 RAM**

306a ACQUISITION PROCESS

306b GENERATION PROCESS

306c DETERMINATION AND CALCULATION PROCESS

306d SOLUTION PROCESS

**307 HARD DISK DEVICE**

307a ACQUISITION PROGRAM

307b GENERATION PROGRAM

307c DETERMINATION AND CALCULATION PROGRAM

307d SOLUTION PROGRAM

Europäisches
Patentamt

European
Patent Office

Office européen
des brevets

# EUROPEAN SEARCH REPORT

**Application Number**

EP 24 18 8225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 567 399 A (ALIBABA GROUP HOLDING LTD) 26 March 2021 (2021-03-26) * page 7 - page 9; figures 1,2 * ----- | 1-7 | INV. G06Q10/047 G06Q10/0631 |
| X | TASNIM IBN FAIZ ET AL: "A Column Generation Algorithm for Vehicle Scheduling and Routing Problems", ARXIV.ORG, CORNELL UNIVERSITY LIBRARY, 201 OLIN LIBRARY CORNELL UNIVERSITY ITHACA, NY 14853, 3 June 2018 (2018-06-03), XP081238090, * pages 6,7,9,17 * ----- | 1-7 | |
| X | OPPEN J ET AL: "Solving a rich vehicle routing and inventory problem using column generation", COMPUTERS AND OPERATIONS RESEARCH, OXFORD, GB, vol. 37, no. 7, 1 July 2010 (2010-07-01), pages 1308-1317, XP026789677, ISSN: 0305-0548, DOI: 10.1016/J.COR.2009.09.014 [retrieved on 2009-10-22] * pages 1-3 * ----- | 1-7 | |

**TECHNICAL FIELDS SEARCHED (IPC)**

G06Q

The present search report has been drawn up for all claims

| Place of search | Date of completion of the search | Examiner |
|---|---|---|
| Munich | 22 October 2024 | Flores Sanchez, L |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 ...............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 18 8225

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2024

| Patent document cited in search report | Publication date | Patent family member(s) | Publication date |
|---|---|---|---|
| CN 112567399 A | 26-03-2021 | CN 112567399 A | 26-03-2021 |
| | | EP 3824419 A1 | 26-05-2021 |
| | | SG 11202006803V A | 29-04-2021 |
| | | US 2020124429 A1 | 23-04-2020 |
| | | WO 2021061094 A1 | 01-04-2021 |

EPO FORM P0459

For more details about this annex : see Official Journal of the European Patent Office, No. 12/82

**EP 4 524 843 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021165196 A